(19)

Europäisches
Patentamt
European
Patent Office
Office européen
des brevets

(11) **EP 2 226 926 A1**

(12) **EUROPEAN PATENT APPLICATION**

(43) Date of publication:
08.09.2010 Bulletin 2010/36

(51) Int Cl.:
*H02M 7/5387* $^{(2007.01)}$  *H02M 7/487* $^{(2007.01)}$
*H02J 3/38* $^{(2006.01)}$

(21) Application number: 09154085.6

(22) Date of filing: 02.03.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(71) Applicant: ABB Research Ltd.
8050 Zürich (CH)

(72) Inventors:
• Coccia, Antonio
8050 Zürich (CH)

• Canales, Francisco
8050 Zürich (CH)
• Serpa, Leonardo-Augusto
8050 Zürich (CH)
• Paakkinen, Mikko
8050 Zürich (CH)

(74) Representative: Valkeiskangas, Tapio Lassi
Paavali
Kolster OY AB
P.O. Box 148
(Iso Roobertinkatu 23)
00121 Helsinki (FI)

(54) **Five-level inverter**

(57)    A DC to AC converter of an inverter bridge type having additional bidirectional switches ($s_5$, $D_5$, $s_6$, $D_6$, $s_7$, $D_7$, $s_8$, $D_8$). The bidirectional switches decouple the load from the DC supply ($u_{dc}/2$) during zero states and there is no need to produce the zero states by turning on simultaneously upper and lower switches of the inverter bridge. A split DC voltage and the bidirectional switches enable the inverter to produce five output voltage levels and reduce the effects of the common mode voltage. The size of the output filter ($L_1$) can be greatly reduced.

Figure 6

EP 2 226 926 A1

**Description**

FIELD OF THE INVENTION

The present invention relates to inverters, and particularly to inverters capable of producing five voltage levels.

BACKGROUND OF THE INVENTION

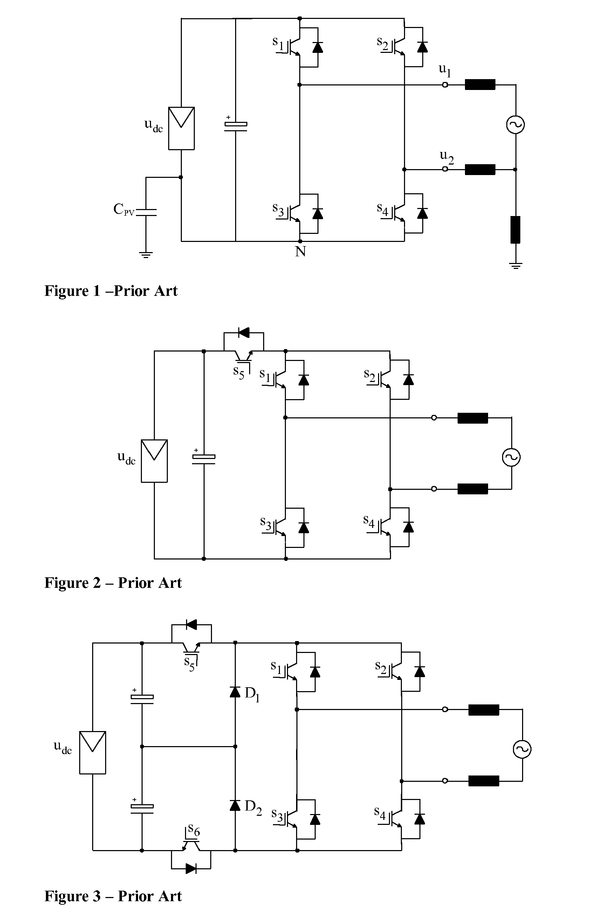

A large number of requirements for grid-connected solar inverters, such as high efficiency, output current/ voltage low harmonic content, low EMI concern, reliability added to the price competition, have driven the inverter development toward more advanced alternatives. These solutions can be basically divided into two categories, isolated and non-isolated topologies, according to the type of decoupling between the photovoltaic (PV) modules and the utility.
In the isolated topologies the bulky and heavy low frequency transformer has been replaced by a high frequency transformer solution. However, converters with high frequency transformers include several power stages and are more complex. Modern inverters tend to avoid the transformer in order to increase efficiency, power density and reduce costs. However, the absence of galvanic isolation may cause fluctuation of the potential across the parasitic capacitance existing between the PV array and ground. This capacitance has been found to be 50-150nF/kW for glass-faced modules and up to $1\mu F/kW$ for thin-film modules. The voltage fluctuation is caused by the common mode voltage which is only limited by the converter common mode impedance. In order to reduce the common mode influence, appropriate power conversion stages and modulation techniques have to be employed.
A further step in the direction to higher efficiency, lower voltage/current harmonic distortion and higher power density can be reached by employing multilevel converters, which offer several advantages compared to the conventional topologies. This sort of converter has the ability to synthesize a sinusoidal output voltage from several voltage levels, producing a staircase wave.
The most used topology in the field of photovoltaic inverters is the classical single-phase full-bridge converter shown in Figure 1. The full-bridge converter has some advantages over the other topologies such as lower complexity and lower number of components. It can operate either under bipolar or unipolar PWM modulation, generating $+u_{dc}$ and $-u_{dc}$ in the first case and $+u_{dc}, 0$ and $-u_{dc}$ in the second technique, when the supplying DC voltage is $u_{dc}$.
However, these two modulation schemes cause different behaviour in terms of efficiency performance and common mode voltage. Considering the switching states presented in Table 1, for the unipolar modulation the common mode calculated according to

$$u_{cm} = \frac{u_{1N} + u_{2N}}{2} \tag{1}$$

vary from $u_{dc}/2$ to $u_{dc}$ or from $u_{dc}/2$ to 0 depending on the zero voltage level applied ($0_P$ or $0_N$). In (1), $u_{1N}$ and $u_{2N}$ refer to voltages from the outputs $u_1$ and $u_2$ of the bridge to neutral point N. This high frequency variation results in voltage steps across the parasitic capacitor $C_{PV}$ formed between the cell and the ground frame. As a consequence an undesirable leakage current flows through this capacitor, bringing safety and degradation issues.

**Table 1 - Full-Bridge switching states and resulting common mode voltage.**

|  | S1 | S2 | S3 | S4 | $u_{cm}$ |
|---|---|---|---|---|---|
| $u_{dc}$ | 1 | 0 | 0 | 1 | $u_{dc}/2$ |
| $-u_{dc}$ | 0 | 1 | 1 | 0 | $u_{dc}/2$ |
| $0_P$ | 1 | 1 | 0 | 0 | $u_{dc}$ |
| $0_N$ | 0 | 0 | 1 | 1 | 0 |

Now considering a bipolar modulation technique, the used output states of the converter are $-u_{dc}$ and $u_{dc}$, resulting in a common mode voltage theoretically constant equal to $u_{dc}/2$. Consequently, there is no or very small leakage current flowing through the parasitic capacitor $C_{PV}$. On the other hand it has some disadvantage such as higher current ripple, switching losses and electromagnetic emissions. The extra losses are caused by the reactive power which is flowing into the converter due to negative pulses generated during the positive half-wave and positive pulses during the negative half-wave. Moreover, the hysteresis losses of the output filter inductor are higher, since the output voltage varies directly from $-u_{dc}$ to $u_{dc}$.

US2005/286281 discloses an extension of the classical full-bridge inverter, which allows taking advantages of the unipolar modulation without suffering from high frequency voltage oscillation across the photovoltaic panel terminals. The method known as H5 shown in Figure 2 includes an extra switch $s_5$ to decouple the ac from the dc side during the free-wheeling phases. The switch $s_5$ is turned-off when the switches $s_1$ and $s_2$ are turned-on to generate a zero output voltage level.

WO2008015298 discloses another method. The high frequency common mode voltage effect is avoided by decoupling the dc side of the inverter via auxiliary switches $s_5$ and $s_6$. The switches of the full-bridge $s_1$-$s_4$ switch according to the grid frequency, while the auxiliary switches are turned-on and off at high frequency. During the positive mains cycle, the switches $s_1$ and $s_4$ are conducting. When the switches $s_5$ and $s_6$ are in the on-state the inverter applies the full dc-link voltage $u_{dc}$ to the load. As a consequence, the current flows through $s_5$, $s_1$, $s_4$ and $s_6$. When $s_5$ and $s_6$ are turned-off, the current flows through the auxiliary diodes $D_1$ and $D_2$, consequently decoupling the dc side from the ac part. The drawback of WO2008015298 is the conduction losses, since the load current is always flowing through four semiconductors.

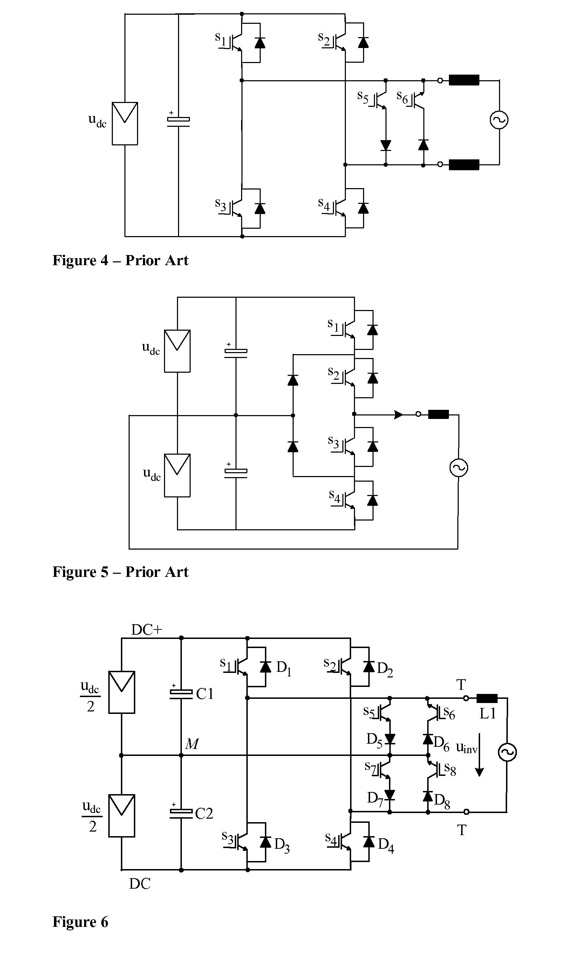

A different method to avoid the high frequency common mode voltage variation on the photovoltaic parasitic component is disclosed in EP 1369985. In this method two additional connection paths are added to the ac terminals of the classical full-bridge converter as shown in Figure 4. The connections are made of a bi-directional switch formed by an anti-parallel connection of one active switch and one diode. By properly operating these extra switches the converter is able to generate three voltage levels and at the same time it decouples the ac side from the photovoltaic source. The zero voltage level is performed by switching either $s_5$ or $s_6$ according to the output current direction.

Another branch of power converters which inherently generates a non-variable common mode voltage is the half-bridge family of inverters with two, three or more output voltage levels. The three-level NPC inverter shown in Figure 5 can generate three output voltage levels and in addition it limits the voltage stress across the switching devices to half of the dc-link. However, this converter requires a dc bus voltage with twice the voltage of the classical full-bridge converter. It can generate an output voltage equal to $u_{dc}$ by switching $s_1$ and $s_2$, 0 by turning on $s_2$ and $s_3$, and $-u_{dc}$ with $s_3$ and $s_4$. This characteristic may, however, compromise the system efficiency.

BRIEF DESCRIPTION OF THE INVENTION

An object of the present invention is to provide an inverter and a method for controlling the inverter so as to overcome the above problems. The object of the invention is achieved by an inverter, a method and a computer program product which are characterized by what is stated in the independent claims. The preferred embodiments of the invention are disclosed in the dependent claims.

The invention is based on the idea of modifying the conventional full-bridge converter by having a split DC-link bus and bidirectional switches connected between output AC terminals and the split DC-link bus. The split DC voltage and bidirectional switches enable the inverter to produce five voltage levels and reduce the effects of the common mode voltage.

An advantage of the inverter of the present invention is that since five voltage levels are achieved at the output, the size of the output filter can be greatly reduced. This is due to the fact that the variation of magnetic flux inside the magnetic core of the output filter is reduced due to smaller voltage steps that can be produced with the inverter. The output filters are costly and bulky structures, and the size reduction obtained with the present invention is highly desirable. Further, also the losses in the filter are reduced due to smaller voltage steps.

The problem relating to the common mode voltage is reduced in the present invention, since the zero states are achieved with the bidirectional switches. These switches decouple the load from the DC supply during zero states and there is no need to produce the zero states by turning on simultaneously upper or lower switches of the inverter bridge.

BRIEF DESCRIPTION OF THE DRAWINGS

In the following the invention will be described in greater detail by means of preferred embodiments with reference to the accompanying drawings, in which

Figures 1, 2, 3, 4 and 5 show prior art inverter structures;
Figure 6 discloses the inverter of the present invention;
Figure 7 show circuit diagrams relating to switching states of the inverter of the present invention;
Figure 8 shows a modulation diagram for controlling the inverter of the present invention;
Figures 9, 10, 11 and 12 show simulated waveforms relating to the inverter of the present invention; and
Figures 13 and 14 disclose embodiments of the present invention.

DETAILED DESCRIPTION OF THE INVENTION

In Figure 6, the structure of the present invention is disclosed. In the present invention, a full-bridge inverter topology is formed with switch components $s_1$, $s_2$, $s_3$ and $s_4$ together with their respective antiparallel diodes $D_1$, $D_2$, $D_3$ and $D_4$. Switches $s_1$ and $s_3$, and $s_2$ and $s_4$ are connected in series between DC link buses DC- and DC+. In a known manner, a full-bridge inverter can produce output voltage which is either Udc or -Udc depending on the control of the switches when the potential difference between the buses is Udc. Thus the potential of the positive bus DC+ and negative bus DC- can be connected to either output terminals T1 or T2. The controllable switches can, for example, be FET-type switches, MOSFETs, IGBTs or SiC switches. Similarly, the used diodes may be SiC diodes.

In the present invention, a series connection of capacitors is connected between the DC voltage, thereby dividing the voltage. Voltage of the DC link is divided equally if the capacitances of the capacitors are equal. In the embodiment of Figure 6 the DC voltage source is shown to be formed of series connection of DC voltage sources and the midpoint between the DC voltage sources is connected to the point between the capacitors. However, the mid-point M between the capacitors need not be connected between voltage sources as will be explained later.

In the present invention five output levels, i.e. voltages across the output terminals T1, T2, are achieved. This is accomplished by connecting bidirectional switch units $s_5$, $D_5$, $s_6$, $D_6$ and $s_7$, $D_7$, $s_8$, $D_8$ between midpoint M of the capacitors and both first and second output terminals T1 and T2. One bidirectional switch unit formed of controllable switches $s_5$ and $s_6$ and diodes $D_5$ and $D_6$ is connected between the midpoint M and output terminal T1 and the other switch unit is thus connected between midpoint and output terminal T2.

In the embodiment of Figure 6 a bidirectional switch comprises a controlled switch component and a diode which are connected in series in such a manner that when a current flows through a forward biased switch it flows also through the diode, thus the series connection of diode and controlled switch allows the current to pass in one direction. The bidirectional switch also comprises another series connection of a controlled switch and a diode, which is connected in antiparallel fashion with the other series connection. Thus the bidirectional switch unit enables the current flow to both directions depending on the control.

The decoupling of AC voltage is performed in the present invention by a series connection of two bidirectional switches formed by $s_5$-$s_6$ and $s_7$-$s_8$ and respective diodes, as shown in Figure 6. The common point of the series connection is connected to the mid-point M of the dc-link bus.

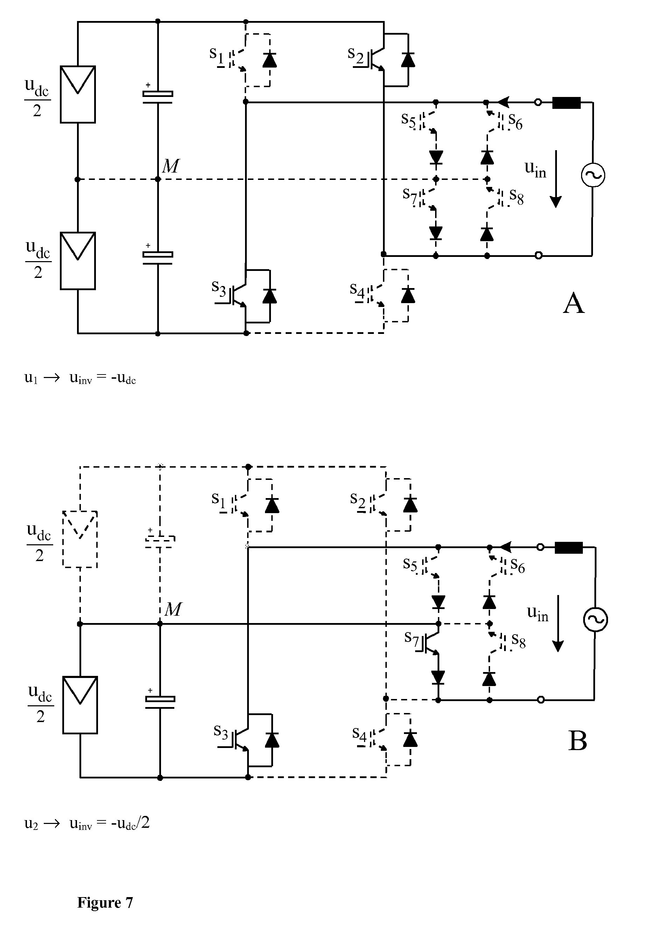

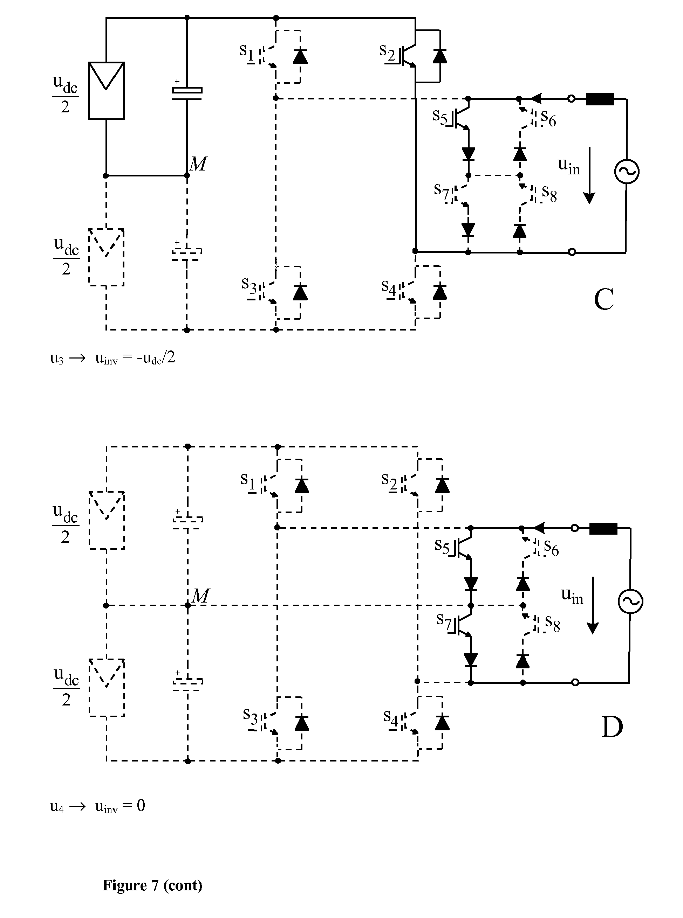

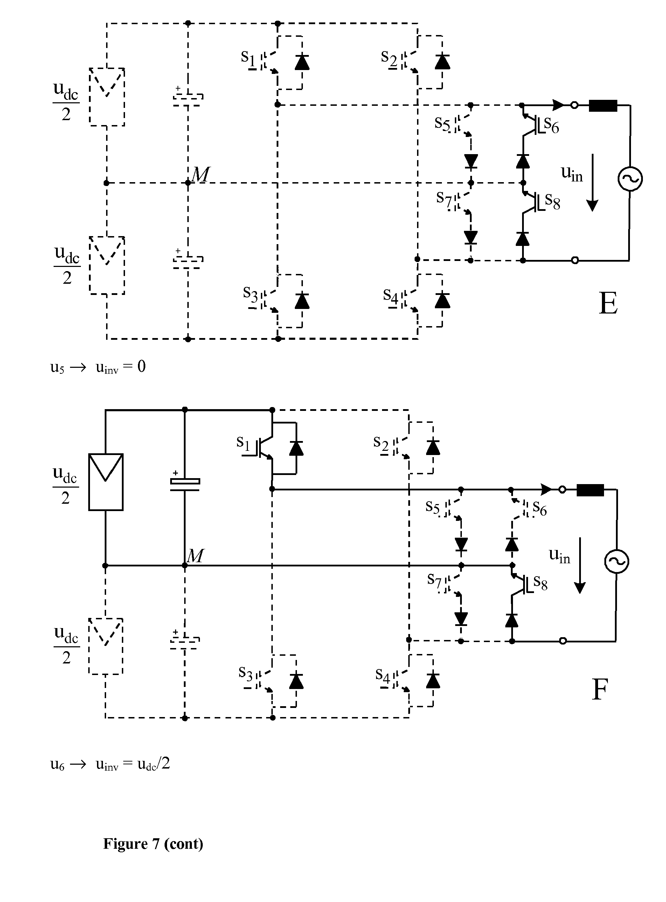

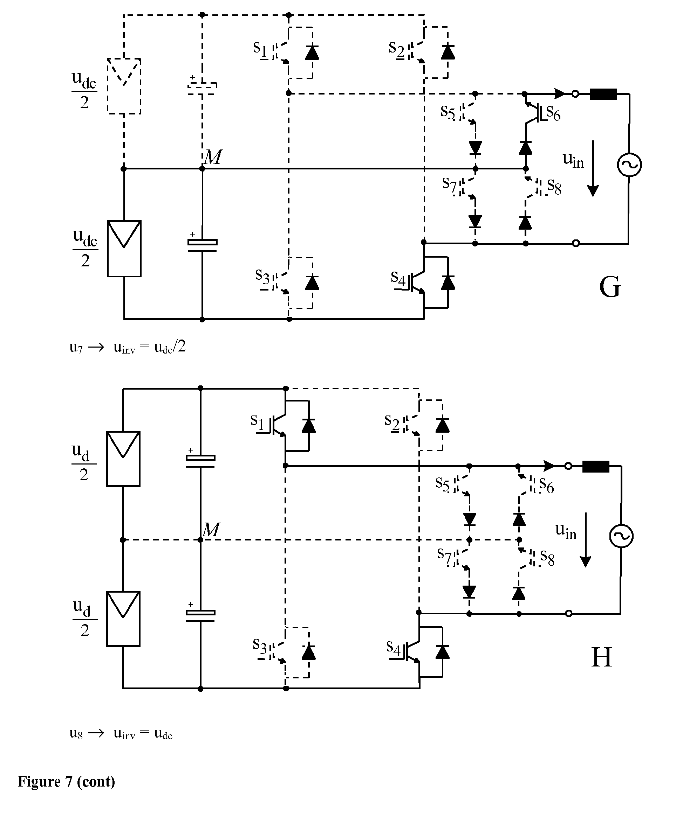

With the aid of bidirectional switches and split input DC voltage, the inverter of the present invention is able to generate five voltage levels to the output $u_{inv}$, namely $-u_{dc}$, $-u_{dc}/2$, 0, $u_{dc}/2$ and $u_{dc}$ from eight different switching states ss ($u_1$-$u_8$) as presented in Table 2 and in the circuit diagrams of Figure 7. One can see that there exist two redundant states for the output levels - $u_{dc}/2$, 0 and $u_{dc}/2$. This extra degree of freedom provides more flexibility in the selection of the switching states according to the defined criteria, which can be to balance the mid-point M potential or optimize the switching pattern to reduce switching losses.

| ss | $u_{inv}$ | Full-Bridge Switches | | | | AC Side Switches | | | | $I_{grid}$ |
|---|---|---|---|---|---|---|---|---|---|---|
| | | $S_1$ | $S_2$ | $S_3$ | $S_4$ | $S_5$ | $S_6$ | $S_7$ | $S_8$ | |
| $u_1$ | $-u_{dc}$ | 0 | 1 | 1 | 0 | 0 | 0 | 0 | 0 | - |
| $u_2$ | $-u_{dc}/2$ | 0 | 0 | 1 | 0 | 0 | 0 | 1 | 0 | - |
| $u_3$ | $-u_{dc}/2$ | 0 | 1 | 0 | 0 | 1 | 0 | 0 | 0 | - |
| $u_4$ | 0 | 0 | 0 | 0 | 0 | 1 | 0 | 1 | 0 | - |
| $u_5$ | 0 | 0 | 0 | 0 | 0 | 0 | 1 | 0 | 1 | + |
| $u_6$ | $u_{dc}/2$ | 1 | 0 | 0 | 0 | 0 | 0 | 0 | 1 | + |
| $u_7$ | $u_{dc}/2$ | 0 | 0 | 0 | 1 | 0 | 1 | 0 | 0 | + |
| $u_8$ | $u_{dc}$ | 1 | 0 | 0 | 1 | 0 | 0 | 0 | 0 | + |

**Table 2 - Five-Level Full-Bridge inverter output voltage levels and respective switching states.**

As mentioned, Figure 7 shows the current paths in the present invention with differing switching states. For example, Figure 7F and 7G show switching states which both produce output voltage $u_{inv} = u_{dc}/2$. In Figure 7F this output voltage is obtained with switches $s_1$ and $s_8$ and the voltage source is the upper of the capacitors connected in series. In Figure 7G the same output voltage is generated from the lower of the capacitors connected in series and the current path is through switch $s_6$ and $s_4$. The same information is also readable from Table 2 where switching states ss $u_6$ and $u_7$ are indicated to provide output voltage $u_{dc}/2$ and in Table 2 "1" indicates a conducting switch component and "0" indicates a blocking switch component. Table 2 further indicates the direction of current $I_{grid}$ which is to give the direction of the current, where "+" denotes current to the grid or load and "-" from the grid or load.

The redundant switching states can be used for balancing the capacitor voltages, where the DC-link is supplied by a single DC-source i.e. the midpoint of the DC-source is not connected between the capacitors. For that purpose, the modulator controlling the switches can choose between the states $u_2$ and $u_3$ (Figure 7B and 7C), which have opposite effects on the capacitor voltages, in order to balance the DC-link mid-point potential. A similar strategy can be used in the voltage level $u_{dc}/2$ with the switching states $u_6$ and $u_7$.

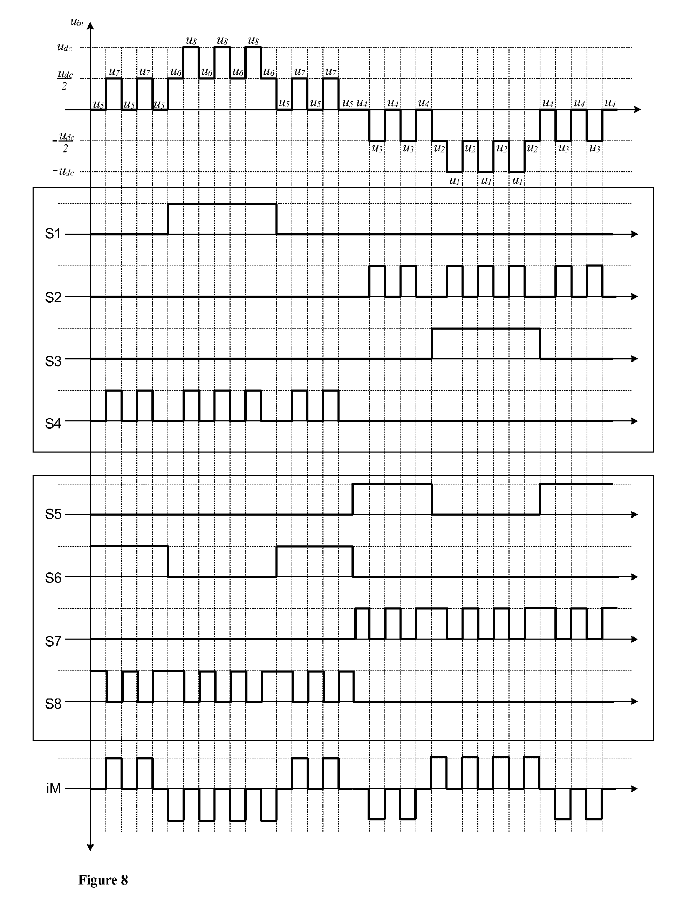

For applications where the efficiency is one of the key requirements, the redundant states can be used to avoid excessive switching. One alternative for a modulation scheme to increase the efficiency is shown in Figure 8 which shows the switch controls in the method of the present invention. One can see that the switches $s_1$, $s_3$, $s_5$ and $s_6$ are switching at low frequency, while the others $s_2$, $s_4$, $s_7$ and $s_8$ switch at high frequency but only during half of the mains cycle. As a consequence, the switching losses are reduced. Control for switches $s_5$ and $s_6$ can be combined such that the both switches $s_5$ and $s_6$ receive the same control which is the combination of pulses for $s_5$ and $s_6$ shown in Figure 8. Similarly, switches of the second bidirectional switch unit can be controlled with the same control, which is the combination of pulses presented for $s_7$ and $s_8$.

In Figure 8 the uppermost plot shows the obtained output voltage $u_{inv}$ together with the switching state used. The output voltage changes at fixed intervals, which is determined by the modulation frequency. It can be considered that a clock pulse is given when a switching state is changed and thus the frequency of this clock pulse is the modulation frequency. As can be seen from Figure 8, the amplitude of the output voltage $u_{inv}$ varies from $-u_{dc}$ (ss $u_1$) to $u_{dc}$ (ss $u_8$) and in steps having a value of $u_{dc}/2$.

The plots below the output voltage indicate the states for each switch component during modulation. It can be seen, for example, that switches $s_1$ and $s_3$ are turned on and off once in a modulation period. Switch $s_1$ is being turned on when switching states $u_6$ and $u_8$ are desired. Since these switching states are used consecutively, switch $s_1$ can conduct a longer period. Similarly switch $s_3$ is used in generating switching states $u_1$ and $u_2$. These switching states are used one after the other and switch $s_3$ has a long conducting period. In the example of Figure 8, the conducting periods for switches $s_1$ and $s_3$ are situated in the periods where the output voltage has its high amplitude points and, as can be seen in Figure 6, switches $s_1$ and $s_3$ are the ones connected in series between the DC voltage.

In the example of Figure 8, the switches $s_2$ and $s_4$ are modulated at a high frequency, but only during half of the modulation period. Similarly, the bidirectional switch unit, comprising the switches $s_7$ and $s_8$, is switched at high frequency. On the other hand, the other bidirectional switch unit having switches $s_5$ and $s_6$ has a lower switching frequency. The switches $s_5$ and $s_6$ are turned on twice in each modulation period or mains cycle, if the output voltage is to be fed to a network. In Figure 8 the pulses of the switches modulating at higher frequency are shown as having constant pulse lengths. However, in the actual case the lengths of the pulses can be varied thus providing pulse width modulation between switches $s_4$ and $s_8$ during positive halfwaves and between $s_2$ and $s_7$ during negative voltage halfwaves of the inverter voltage.

Another characteristic of the modulation presented in Figure 8 is the self balancing of the dc-link capacitor voltages, since the average value of the mid-point current iM over one mains period is zero. Thus the mid-point of the capacitors does not have to be coupled to a midpoint of the supplying DC voltage. As can be seen in Figure 8, the choice of switching states affects the direction of current iM. For example switching states $u_3$ and $u_2$, which both produce voltage $-u_{dc}/2$, produce a current with differing directions.

An additional advantage of the proposed five-level topology in comparison to classical multilevel converters is that it applies the full dc-link voltage to the load. For example, in the three-level NPC topology shown in Figure 5, the inverter is only able to apply half of the dc-link voltage. Therefore, the inverter of the present invention demands half of the dc-link voltage ($u_{dc}$) required in the conventional multilevel converters ($2u_{dc}$). Further in the present invention, the voltage across the full-bridge switches $s_1$-$s_4$ is equal to the dc-link bus $u_{dc}$, while for the bidirectional switches $s_5$-$s_8$ the voltage stress is equal to half of the total dc-link bus $u_{dc}/2$ irrespective of the switching state.

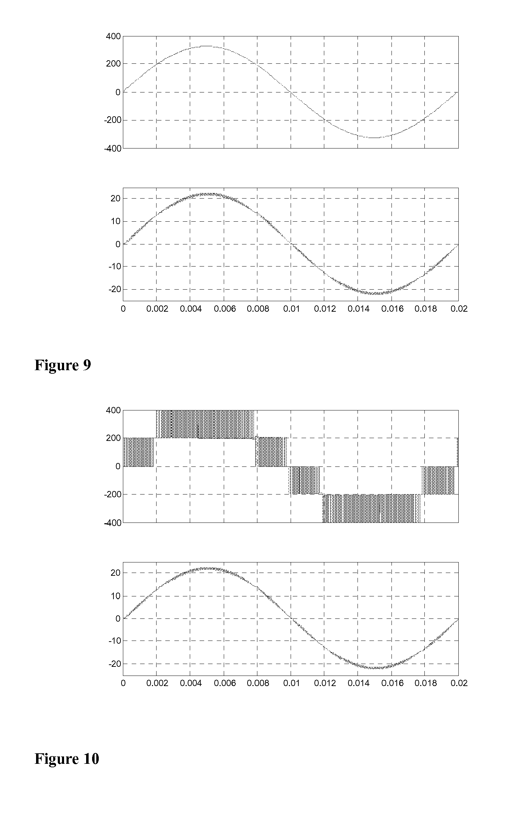

The static behaviour of the inverter according to the present invention is shown via simulation analysis in Figure 9 to Figure 12. Figure 9 shows the grid voltage in the upper plot and the generated grid current in the lower plot over one mains cycle when the inverter feeds power to the grid. Figure 10, on the other hand, shows inverter output voltage $u_{inv}$ in the upper plot and grid current in the lower plot. It can be seen that the staircase voltage appearing in the inverter output is filtered so that the voltage after the filter (L in Figure 6) appears as sinusoidal. The filter in Figure 6 is presented as an inductor. However, for more efficient filtering also an LC- or LCL-filter may be employed. Further, the inductance of the filter may be split between the output terminals such that both terminals T1 and T2 have an inductor coupled thereto.

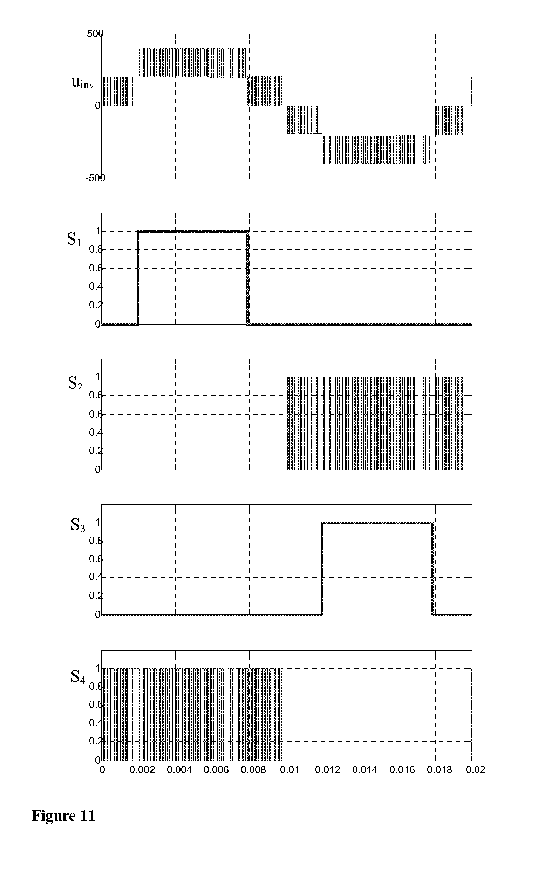

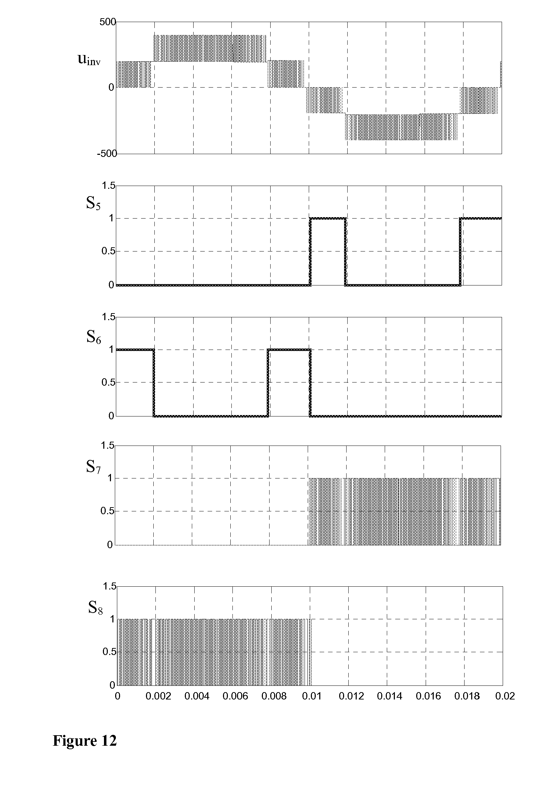

The switching pattern simulation presented in Figure 11 and Figure 12 is based on the same modulation pattern as presented in Figure 8. In Figures 11 and 12 the switching frequency is much higher than in Figure 8, and corresponds to actually usable frequency. In Figure 11 the upper plot labelled as $u_{inv}$ shows the staircase voltage appearing at the inverter output. The second highest plot shows control applied to switch $s_1$, next plot control of switch $s_2$ and two lowest plots show control applied to switch $s_3$ and switch $s_4$. Thus these controls are the control signals applied to the full-bridge inverter of Figure 6. It can be seen from the inverter voltage and control signals that, when inverter voltage is varied between $u_{dc}/2$ and $u_{dc}$, switch $s_1$ is controlled conducting. Similarly when inverter voltage is varied between $-u_{dc}/2$ and $-u_{dc}$, switch $s_3$ is controlled conducting. Switch $s_2$ is modulated at high frequency when the inverter voltage has a negative half wave and, similarly, during a positive half wave of the inverter output voltage switch $s_4$ is modulated at high frequency.

In Figure 12 control of bidirectional switching units is plotted together with the inverter voltage $u_{inv}$ during the same grid cycle as in Figure 11. It can be seen from the subplots of Figure 12 that switch $s_5$ receives control signal when inverter voltage changes between 0 and $-u_{dc}/2$. Similarly, when inverter voltage varies between 0 and $u_{dc}/2$, switch $s_6$ is controlled conducting. Both switches $s_5$ and $s_6$ are thus turned on and off twice during each grid cycle. It can be further seen that switch $s_7$ is modulated, when inverter voltage has a negative half cycle, and switch $s_8$ is modulated, when inverter voltage is positive.

The inverter of the present invention is preferably used in supplying energy to an electrical network i.e. to grid. The grid may be an island grid having no other units supplying energy to the grid. The grid may also be the utility whereby the inverter has to be synchronized with the voltage of the grid.

Figures 8, 11 and 12 show one possibility for modulating the inverter of the present invention. In the presented modulation the switching losses are reduced by switching some of the devices at low switching frequency (line frequency). Additionally, the switches operating at higher frequency are switching only during half of the mains cycle.

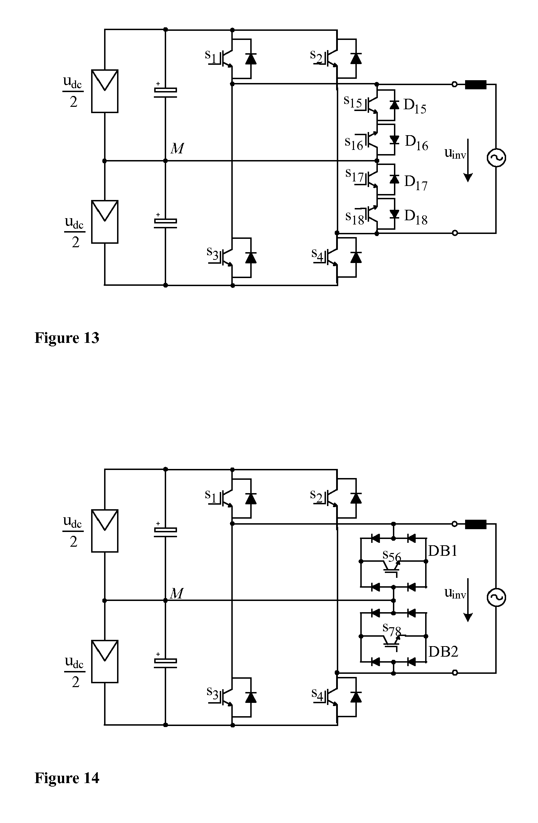

Figure 13 discloses another embodiment of the present invention. In this embodiment the bidirectional switch units have been modified with respect to the embodiment of Figure 6. In Figure 13 the bidirectional switch units comprise two controlled switches $s_{15}$, $s_{16}$; $s_{17}$, $s_{18}$ with antiparallel diodes. The controlled switches of a bidirectional switch unit are connected in series with each other with opposite polarities. For example, when $s_{15}$ is turned on, the current can pass through $s_{15}$ and diode connected in antiparallel with switch $s_{16}$. Thus the bidirectional switch units can conduct current in both directions. The control of switches can be carried out similarly to the structure presented in Figure 6 by replacing control to switches $s_5$, $s_6$, $s_7$ and $s_8$ of Figure 6 with switches $s_{15}$, $s_{16}$, $s_{17}$ and $s_{18}$, respectively.

Figure 14 discloses yet another embodiment of the present invention. Again, in Figure 14 the bidirectional switch units have been modified. In this case the bidirectional switch unit comprises one controlled switch $s_{56}$; $s_{78}$ and a diode bridge DB1; DB2. The diode bridge allows the current to pass through the controlled switch in correct direction no matter from which direction the current is flowing from, when the controlled switch is turned on. When the switch $s_{56}$; $s_{78}$ is turned off, current cannot pass the diode bridge. Since in this embodiment only one controlled switch is used in both bidirectional switch units, the controls of switches $s_5$ and $s_6$ of Figure 6 have to be combined for switch $s_{56}$. Similarly, the controls of $s_7$ and $s_8$ have to be combined for switch $s_{78}$ if similar control as in connection with Figure 6 is desired.

The switches of the inverter of the present invention are controlled on the basis of control signals obtained from a modulator, a switching logic or the like. The modulator gives control signals to the circuitry according to which the switches are controlled. The control signals may be further amplified so that they are suitable for driving the switches in question. The modulator determines the switching combination used and gives control signals according to the required switching combination. The modulator may also work on the basis of pre-calculated patterns which are stored in a table. In this case the modulator reads the table and outputs control signals according to the values from the table.

The above modulator or a unit providing corresponding functionality may be implemented at least partly by means of one or more computers or corresponding digital signal processing (DSP) equipment provided with suitable software, for example. Such a computer or digital signal processing equipment preferably comprises at least a working memory (RAM) providing storage space for arithmetical operations, and a central processing unit (CPU), such as a general-purpose digital signal processor. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention, or a part thereof, further preferably comprises suitable input means for receiving, for example, measurement and/or control data, which input means thus enable e.g. the monitoring of current and voltage quantities, and output means for outputting control data, for instance. It is also possible to use a specific integrated circuit or circuits, or discrete electric components and devices for implementing the functionality according to any one of the embodiments.

When software is used for implementing the functionality, at least partly, of the invention, such software can be provided as a computer program product comprising a computer program code which, when run on a computer, causes the computer or a corresponding arrangement to perform the functionality according to the invention as described above. Such a computer program code may be stored or generally embodied on a computer-readable medium, such as a suitable memory, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

If desired, the inverter of the present invention can also act as a 3-level inverter instead of 5 levels described above. In 3-level operation switching states $u_2$, $u_3$, $u_6$ and $u_7$ are not used and the inverter voltage changes between 0 to $u_{dc}$ and 0 to $-u_{dc}$.

Although the present invention solves some problems relating to photovoltaic cells, the inverter of the present invention is independent of the type of the supplying DC voltage. This DC voltage can be, for example, provided by batteries, fuel cells, super capacitors and wind turbines with rectifiers, etc.

In the drawings, the embodiments of the present invention are presented without any EMI-filters provided between the DC-voltage source and the inverter. However, in practical solutions, an EMI-filter can be placed between the DC-voltage source and the inverter to reduce electromagnetic interference.

Further, in the embodiments described above, the inverter is directly connected to a DC voltage source. It is, however, clear that a DC-DC converter may be applied between the voltage source and inverter. The purpose of this kind of converter is to change the level of the supplying DC voltage to better suit the inverter and the converter may be of step-up or step-down type. If a DC-DC converter is used, an EMI filter may be provided between the converter and the source of DC voltage.

It will be obvious to a person skilled in the art that, as the technology advances, the inventive concept can be implemented in various ways. The invention and its embodiments are not limited to the examples described above but may vary within the scope of the claims.

**Claims**

1. An inverter comprising two series connections of switch components ($s_1$, $s_2$, $s_3$, $s_4$) connected between a DC voltage bus supplied by a DC voltage source, each switch component comprising a free wheeling diode ($D_1$, $D_2$, $D_3$, $D_4$) connected in antiparallel fashion with the respective switch, whereby the output terminals of the inverter are produced from the midpoints between the series connections of switch components, **characterized in that** the inverter further comprises

   a series connection of capacitors (C1, C2) connected between the DC voltage bus for producing a midpoint (M) of the DC voltage to the point between the capacitors,
   a first bidirectional switch unit ($s_5$, $D_5$, $s_6$, D6; $s_{15}$, $D_{15}$, $s_{16}$, $D_{16}$; $s_{56}$, DB1) connected between the midpoint (M) and a first output terminal (T1) of the inverter, and
   a second bidirectional switch unit ($s_7$, $D_7$, $s_8$, $D_8$; $s_{17}$, $D_{17}$, $s_{18}$, $D_{18}$; $s_{78}$, DB2) connected between the midpoint (M) and a second output terminal (T2) of the inverter.

2. An inverter according to claim 1, **characterized in that** the midpoint (M) of the DC capacitors is further connected to the midpoint of the DC voltage source.

3. An inverter according to claim 1 or 2, **characterized in that** the DC voltage source is a photovoltaic panel or a plurality of photovoltaic panels electrically connected to each other, a battery, a fuel cell, a super capacitor or a wind turbine with a rectifier.

4. An inverter according to claim 1, 2 or 3, **characterized in that** the bidirectional switch unit comprises two series connections of the controllable switch ($s_5$, $s_6$; $s_7$, $s_8$) and the diode ($D_5$, $D_6$; $D_7$, $D_8$) connected in anti-parallel with each other, the diodes in the series connection being connected in a direction allowing a current to pass the controlled switch.

5. An inverter according to claim 1, 2 or 3, **characterized in that** the bidirectional switch unit comprises a series connection of controllable switches ($s_{15}$, $s_{16}$; $s_{17}$, $s_{18}$) connected in series with opposing polarities and diodes ($D_{15}$, $D_{16}$; $D_{17}$, $D_{18}$) connected in antiparallel with the switches.

6. An inverter according to claim 1,2 or 3, **characterized in that** the bidirectional switch unit comprises a controllable switch ($s_{56}$; $s_{78}$) and a diode bridge (DB1, DB2), the diode bridge being arranged to rectify the current to the switch such that current may pass the bidirectional switch unit in both directions and the switch in one direction.

7. An inverter according to any one of claims 1 to 6, **characterized in that** the inverter further comprises an output filter.

8. An inverter according to any one of claims 1 to 7, **characterized in that** the inverter is arranged to feed power to an electric network.

9. An inverter according to any one of claims 1 to 8, **characterized in that** a DC-DC converter is connected between the supplying DC-voltage and the inverter.

10. A method for controlling an inverter according to any one of claims 1 to 9 for providing an alternating output voltage having a voltage cycle, wherein
the midpoint of series connection of first and third switch components ($s_1$, $s_3$) is connected to a first output terminal (T1) and the first switch component is connected to a positive bus (DC+) and the third switch component is connected to a negative bus (DC-),
the midpoint of series connection of second and fourth ($s_2$, $s_4$) components is connected to a second output terminal (T2) and the second switch component is connected to a positive bus (DC+) and the fourth switch component is connected to a negative bus (DC-), and
wherein voltage between the negative bus and the positive bus is $u_{dc}$ and the method comprises the steps:

producing output voltage varying between 0 and $u_{dc}/2$ by turning on a first bidirectional switch unit and modulating the fourth switch and a second bidirectional switch unit,
producing output voltage varying between $u_{dc}/2$ and $u_{dc}$ by turning on the first switch and modulating the fourth switch and the second bidirectional switch unit,
producing output voltage varying between 0 and $-u_{dc}/2$ by turning on the first bidirectional switch unit and modulating the second switch and the second bidirectional switch unit, and
producing output voltage varying between $-u_{dc}/2$ and $-u_{dc}$ by turning on a third switch and modulating the second switch and the second bidirectional switch unit.

11. The method according to claim 10, wherein each of the first switch, third switch and first bidirectional switch unit have one conducting period during each voltage cycle.

12. The method according to claim 10 or 11, wherein the modulated switches are modulated using pulse width modulation.

13. The method according to claim 10, 11 or 12, wherein different switching combinations for the same output voltage are used for balancing the voltage of the capacitors connected in series between the DC voltage bus.

14. The method according to any one of the previous claims 10 to 13, wherein the output voltages are produced in response to control signals.

15. A computer program product comprising a computer program code, wherein the execution of the program code on a computer causes the computer to produce the control signals according to claim 14 to carry out the steps of the method according to any one of claims 10 to 13.

**Figure 1 – Prior Art**

**Figure 2 – Prior Art**

**Figure 3 – Prior Art**

**Figure 4 – Prior Art**

**Figure 5 – Prior Art**

**Figure 6**

$u_1 \rightarrow \quad u_{inv} = -u_{dc}$

$u_2 \rightarrow \quad u_{inv} = -u_{dc}/2$

**Figure 7**

$u_3 \rightarrow u_{inv} = -u_{dc}/2$

$u_4 \rightarrow u_{inv} = 0$

Figure 7 (cont)

$$u_5 \rightarrow \quad u_{inv} = 0$$

$$u_6 \rightarrow \quad u_{inv} = u_{dc}/2$$

**Figure 7 (cont)**

$u_7 \rightarrow\ u_{inv} = u_{dc}/2$

$u_8 \rightarrow\ u_{inv} = u_{dc}$

**Figure 7 (cont)**

**Figure 8**

Figure 9

Figure 10

**Figure 11**

Figure 12

**Figure 13**

**Figure 14**

Europäisches
Patentamt

European
Patent Office

Office européen
des brevets

## EUROPEAN SEARCH REPORT

**Application Number**

EP 09 15 4085

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MINGYAN WANG ET AL: "A nine-switch three-level inverter for electric vehicle applications" VEHICLE POWER AND PROPULSION CONFERENCE, 2008. VPPC '08. IEEE, IEEE, PISCATAWAY, NJ, USA, 3 September 2008 (2008-09-03), pages 1-5, XP031363329 ISBN: 978-1-4244-1848-0 * figures 1,7,9 * * paragraph [0III] * | 1,6,8, 10-15 | INV. H02M7/5387 H02M7/487  ADD. H02J3/38 |
| Y | | 4,5,7,9 | |
| A | | 2,3 | |
| X | SINGH B ED - DAVAT B: "Recent Trends in Power Quality Improvements Techniques" POWER ELECTRONICS AND DRIVE SYSTEMS, 2007. PEDS '07. 7TH INTERNATIONAL CONFERENCE ON, IEEE, PISCATAWAY, NJ, USA, 27 November 2007 (2007-11-27), pages 1-155, XP031242475 ISBN: 978-1-4244-0644-9 * page 118 * | 1,5,8 | |
| | | | TECHNICAL FIELDS SEARCHED (IPC) |
| A | | 2-4,7, 9-14 | H02M |
| Y | | 6 | |
| X | US 4 670 828 A (SHEKHAWAT SAMPAT S [US] ET AL) 2 June 1987 (1987-06-02) * figure 1 * * column 2, line 65 - column 3, line 26 * | 1-3,6,8 | |
| A | | 2-4,7, 9-14 | |
| Y | | 5 | |
| | -/-- | | |

The present search report has been drawn up for all claims

| Place of search | Date of completion of the search | Examiner |
|---|---|---|
| Munich | 6 August 2009 | Zettler, Karl-Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 15 4085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JOSE M BURDIO ET AL: "A Synthesis Method for Generating Switched Electronic Converters" IEEE TRANSACTIONS ON POWER ELECTRONICS, IEEE SERVICE CENTER, PISCATAWAY, NJ, US, vol. 13, no. 6, 1 November 1998 (1998-11-01), XP011043232 ISSN: 0885-8993 * table II * | 4,6 | |
| Y | US 6 330 170 B1 (WANG KUNRONG [US] ET AL) 11 December 2001 (2001-12-11) * figure 5 * * column 5, lines 2,3 * * claim 5 * | 7 | |
| Y | US 2007/035975 A1 (DICKERSON ARTHUR F [US] ET AL) 15 February 2007 (2007-02-15) * figures 5a,5b,5c * * paragraph [0010] * | 9 | |
| | | | TECHNICAL FIELDS SEARCHED (IPC) |

The present search report has been drawn up for all claims

| Place of search | Date of completion of the search | Examiner |
|---|---|---|
| Munich | 6 August 2009 | Zettler, Karl-Rudolf |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 15 4085

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2009

| Patent document cited in search report | | Publication date | Patent family member(s) | | Publication date |
|---|---|---|---|---|---|
| US 4670828 | A | 02-06-1987 | EP<br>JP<br>WO | 0258428 A1<br>63502953 T<br>8705163 A1 | 09-03-1988<br>27-10-1988<br>27-08-1987 |
| US 6330170 | B1 | 11-12-2001 | NONE | | |
| US 2007035975 | A1 | 15-02-2007 | US | 2008106921 A1 | 08-05-2008 |

For more details about this annex : see Official Journal of the European Patent Office, No. 12/82

**EP 2 226 926 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050286281 A
- WO 2008015298 A
- EP 1369985 A